(19) Europäisches Patentamt
European Patent Office
Office européen des brevets

(11) Veröffentlichungsnummer: **0 000 051**
**B1**

(12) **EUROPÄISCHE PATENTSCHRIFT**

(21) Anmeldenummer: **78100091.4**

(22) Anmeldetag: **05.06.78**

(51) Int. Cl.³: **C 07 C 103/42, A 01 N 37/18**

# (54) N-acylmethyl-chloroacetanilide, Verfahren zu ihrer Herstellung sowie ihre Verwendung als Herbizide.

(30) Priorität: **10.06.77 DE 2726253**

(43) Veröffentlichungstag der Anmeldung:
**20.12.78 Patentblatt 78/01**

(45) Bekanntmachung des Hinweises auf die Patenterteilung:
**17.09.80 Patentblatt 80/19**

(84) Benannte Vertragsstaaten:
**BE CH DE FR GB NL SE**

(56) Entgegenhaltungen:
**FR - A - 2 216 916**
**US - A - 3 966 811**

(73) Patentinhaber: **BAYER AG**
**Zentralbereich Patente, Marken und Lizenzen**
**D - 5090 Leverkusen 1, Bayerwerk (DE)**

(72) Erfinder: **Regel, Erik, Ing.-(Grad)**
**Bergerheide 72a**
**D - 5600 Wuppertal 1 (DE)**
**Eue, Ludwig, Dr.**
**Paul-Klee-Strasse 36**
**D - 5090 Leverkusen 1 (DE)**
**Schmidt, Robert Rudolf, Dr.**
**Hahnenweg 5**
**D - 5000 Köln 80 (DE)**

**EP 0 000 051 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

N-Acylmethyl-chloracetanilide, Verfahren zu ihrer Herstellung sowie ihre Verwendung als herbizide

Die vorliegende Erfindung betrifft neue N-Acylmethyl-chloracetanilide, ein Verfahren zu ihrer Herstellung sowie ihre Verwendung als Herbizide.

Es ist bereits bekannt geworden, daß Chloracetanilide, wie beispielsweise 2-Aethyl-6-methyl-N-(1'-methyl-2'-methoxy-äthyl)-chloracetanilid, als Herbizide, insbesondere zur Bekämpfung von grasartigen Unkräutern, verwendet werden können (vergleiche DT—OS 2 328 340). Diese Verbindungen sind jedoch nicht gegen alle Gräser gleich gut wirksam und in ihrer Selektivität nicht immer ganz befriedigend.

In der FR—PS 2,216,916 werden Chloracetanilide offenbart, in denen das Stickstoffatom außer mit dem substituierten Phenylring und der Chloracetyl-Gruppe auch mit einem als —A—OR bezeichneten Rest verbunden ist, wobei die als "A" bezeichnete Gruppe zwingend für eine gegebenenfalls ein- oder zweifach durch Methyl substituierte Äthylen-Einheit steht. Stoffe, in denen der betreffende Molekülteil eine gegebenenfalls substituierte Methylen-Einheit bedeutet, werden hingegen nicht erwähnt. Im übrigen können die in der FR—PS 2 216 916 aufgeführten Stoffe im Anilinteil in der 2- und 6-Position des Phenylringes nicht gleichzeitig Alkylreste tragen.

Aus der US—PS 3,966,811 sind Chloracetanilide bekannt, in denen das Stickstoffatom des Anilinteiles als zusätzliche Substituenten eine Haloacetyl-Gruppe und eine über Methylen gebundene Acetal-Gruppe trägt. Vergleichbare Stoffe, in denen statt des Acetal-Restes eine Alkylcarbonyl-Gruppe oder eine Phenylcarbonyl-Gruppe enthalten ist, werden in der US—PS 3,966,811 jedoch nicht beschrieben.

Es wurden neue N-Acylmethyl-chloracetanilide der Formel

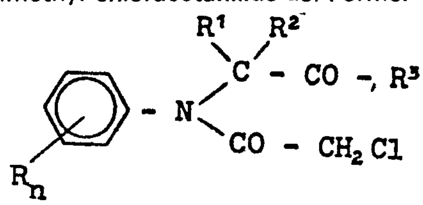

(I)

in welcher

R für Alkyl, Halogen, Halogenalkyl, Alkylthio, Alkylsulfonyl, Aminosulfonyl, Cyano oder Nitro steht,

$R^1$ und $R^2$ gleich oder verschieden sind und für Wasserstoff, Alkyl, Halogen, Halogenalkyl oder gegebenenfalls substituiertes Phenyl stehen,

$R^3$ für Alkyl oder gegebenenfalls substituiertes Phenyl steht und

n für ganze Zahlen von 0 bis 5 steht,

aufgefunden.

Diese neuen N-Acylmethyl-chloracetanilide weisen starke herbizide, insbesondere auch selektivherbizide Eigenschaften auf.

Weiterhin wurde gefunden, daß man die N-Acylmethyl-chloracetanilide der Formel (I) erhält, wenn man N-Alcylmethylaniline der Formel

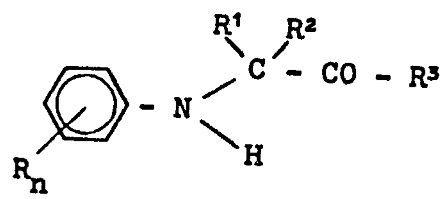

(II)

in welcher

R,$R^1$,$R^2$,$R^3$ und n die oben angegebene Bedeutung haben,

mit Chloracetylchlorid in Gegenwart eines Verdünnungsmittels umsetzt.

Überraschenderweise sind die erfindungsgemäßen N-Acylmethylchloracetanilide den vorbekannten Chloracetaniliden, wie beispielsweise 2-Aethyl-6-methyl-N-(1'methyl-2'-methoxy-äthyl)-chloracetanilid, in der herbiziden Wirkung überlegen, da neben den Gräsern Setaria, Lolium und Echinochloa vor allem auch Sinapis besser erfaßt wird. Außerdem zeigen sie eine bessere Selektivität in wichtigen Kulturpflanzen. Die erfindungsgemäßen Wirkstoffe stellen somit eine wesentlich Bereicherung der herbiziden Mittel dar.

Die erfindungsgemäßen N-Acylmethylchloracetanilide unterscheiden sich konstitutionell von den aus der FR—PS 2,216,916 und der US—PS 3,966,811 bekannten Stoffen in signifikanter Weise, denn in keiner der vorbeschriebenen Verbindungen ist eine Alkylcarbonyl- oder Phenylcarbonyl-Gruppe über ein Kohlenstoffatom an das Stickstoffatom des Haloacetanilid-Teiles gebunden. Im Falle derjenigen Verbindungen, die in der FR—PS 2,216,916 offenbart sind, ist der betreffende Molekülteil jeweils eine über eine gegebenenfalls ein- oder zweifach durch Methyl substituierte Äthylen-Einheit gebundene Methoxy- oder Ethoxy-Gruppe, während der entsprechende Molekülteil in den erfindungsgemäßen Stoffen jeweils eine gegebenenfalls substituierte Methylen-Gruppe bedeutet, Außerdem unterschei-

den sich die erfindungsgemäßen N-Acylmethyl-chloracetanilide von den in der FR—PS 2,216,916 genannten Stoffen auch hinsichtlich des Substitutionsmusters im Anilid-Teil, denn im Falle der vorbekannten Stoffe können die 2- und 6-Position des Phenylringes nicht gleichzeitig durch Alkyl besetzt sein. — Bei den in der US—PS 3,966,811 beschriebenen Stoffen handelt es sich um Acetale, wohingegen die erfindungsgemäßen Verbindungen eine Alkylcarbonyl- oder Phenylcarbonyl-Gruppe an der betreffenden Stelle enthalten.

Verwendet man 2,6-Dimethyl-N-benzoylmethyl-anilin und Chloracetylchlorid als Ausgangsstoffe, so kann der Reaktionsablauf durch das folgende Formelschema wiedergegeben werden:

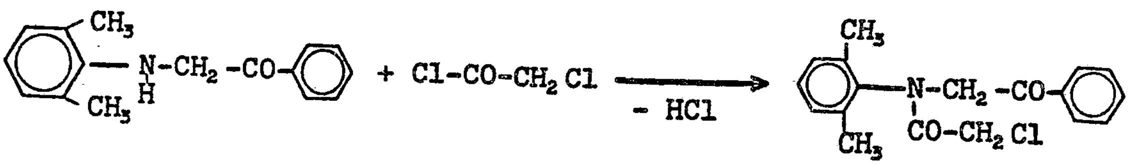


Die als Ausgangsstoffe zu verwendenden N-Acylmethyl-aniline sind durch die Formel (II) allgemein definiert. In dieser Formel steht R vorzugsweise für geradkettiges oder verzweigtes Alkyl mit 1 bis 6, insbesondere 1 bis 4 Kohlenstoffatomen, Halogen, insbesondere Fluor, Chlor und Brom, Halogenalkyl mit bis zu 3 Kohlenstoff- und bis zu 5 gleichen oder verschiedenen Halogenatomen, wobei als Halogene insbesondere Fluor und Chlor stehen, beispielhaft sei Trifluormethyl genannt; ferner vorzugsweise für Alkylthio und Alkylsulfonyl mit 1 bis 4 Kohlenstoffatomen im Alkylteil sowie für Aminosulfonyl, Cyano und Nitro. $R^1$ und $R^2$ sind gleich oder verschieden und stehen vorzugsweise für Wasserstoff, geradkettiges oder verzweigtes Alkyl mit 1 bis 4 Kohlenstoffatomen, Halogen, insbesondere Fluor, Chlor und Brom, Halogenalkyl mit bis zu 3 Kohlenstoff- und bis zu 5 gleichen oder verschiedenen Halogenatomen, wobei als Halogene insbesondere Fluor und Chlor stehen sowie vorzugsweise für gegebenenfalls einfach oder mehrfach substituiertes Phenyl, wobei als Substituenten vorzugsweise die für R genannten Reste infrage kommen. $R^3$ steht vorzugsweise für geradkettiges oder verzweigtes Alkyl mit 1 bis 6, insbesondere 1 bis 4 Kohlenstoffatomen sowie für gegebenenfalls einfach oder mehrfach substituiertes Phenyl, wobei als Substituenten vorzugsweise die bei R bereits genannten Reste sowie Phenyl und Phenoxy, die ebenfalls durch R substituiert sein können, infrage kommen.

Die N-Acylmethyl-aniline der Formel (II) sind bekannt (vergleiche u.a. Bischler, Chem.Ber. *25*, 2865 (1892) sowie Crowther, Mann, Purdie, Chem.Soc. *1943,* 63) oder lassen sich nach bekannten Methden herstellen. Man erhält sie z.B., indem man Aniline mit $\alpha$-Halogenketonen in Gegenwart eines organischen Lösungsmittels, wie z.B. Aethanol, umsetzt (vergleiche auch die Herstellungsbeispiele).

Als Verdünnungsmittel kommen für die erfindungsgemäße Umsetzung vorzugsweise inerte organische Lösungsmittel infrage. Hierzu gehören vorzugsweise Ketone, wie Diäthylketon, insbesondere Aceton und Methyläthylketon; Nitrile, wie Propionitril, insbesondere Acetonitril; Aether, wie Tetrahydrofuran oder Dioxan; aliphatische und aromatische Kohlenwasserstoffe, wie Petroläther, Benzol, Toluol oder Xylol; halogenierte Kohlenwasserstoffe, wie Methylenchlorid, Tetrachlorkohlenstoff, Chloroform oder Chlorbenzol; und Ester, wie Essigester.

Die Reaktionstemperaturen können bei der Durchführung des erfindungsgemäßen Verfahrens in einem größeren Bereich variiert werden. Im allgemeinen arbeitet man zwischen 0 und 120°C, vorzugsweise zwischen 20 und 100°C.

Bei der Durchführung des erfindungsgemäßen Verfahrens setzt man vorzugsweise auf 1 Mol der Verbindung der Formel (II) 1 bis 3 Mol Chloracetylchlorid ein. Die Isolierung der Verbindungen der Formel (I) erfolgt in üblicher Weise.

Die erfindungsgemäßen Wirkstoffe beeinflussen das Pflanzenwachstum und können deshalb als Defoliants, Desiccants, Krautabtötungsmittel, Keimhemmungsmittel und insbesondere als Unkrautvernichtungsmittel verwendet werden. Unter Unkraut im weitesten Sinne sind alle Pflanzen zu verstehen, die an Orten aufwachsen, wo sie unerwünscht sind. Ob die erfindungsgemäßen Stoffe als totale oder selektive Herbizide wirken, hängt im wesentlichen von der angewendeten Menge ab.

Die erfindungsgemäßen Wirkstoffe können z.B. bei den folgenden Pflanzen verwendet werden:
*Dikotyle Unkräuter* der Gattungen: Senf (Sinapis), Kresse (Lepidium), Labkraut (Galium), Sternmiere (Stellaria), Kamille (Matricaria), Hundskamille (Anthemis), Knopfkraut (Galinsoga), Gänsefuß (Chenopodium), Brennessel (Urtica), Kreuzkraut (Senecio), Fuchsschwanz (Amaranthus), Portulak (Portulaca), Spitzklette (Xanthium), Winde (Convolvulus), Prunkwinde (Ipomoea), Knöterich (Polygonum), Sesbanie (Sesbania), Ambrosie (Ambrosia), Kratzdistel (Cirsium), Distel (Carduus), Gänsedistel (Sonchus), Nachtschatten (Solanum), Sumpfkresse (Rorippa), Rotala, Büchsenkraut (Lindernia), Taubnessel (Lamium), Ehrenpreis (Veronica), Schönmalve (Abutilon), Emex, Stechapfel (Datura), Veilchen (Viola), Hanfnessel, Hohlzahn (Galeopsis), Mohn (Papaver), Flockenblume (Centaurea).
*Dicotyle Kulturen* der Gattungen: Baumwolle (Gossypium), Sojabohne (Glycine), Rübe (Beta), Möhre (Daucus), Gartenbohne (Phaseolus), Erbse (Pisum), Kartoffel (Solanum), Lein (Linum), Prunkwinde (Ipo-

moea), Bohne (Vicia), Tabak (Nicotiana), Tomate (Lycopersicon), Erdnuß (Arachis), Kohl (Brassica), Lattich (Lactuca), Gurke (Cucumis), Kürbis (Cuburbita).

*Monokotyle Unkräuter* der Gattungen: Hühnerhirse (Echinochloa), Borstenhirse (Setaria), Hirse (Panicum), Fingerhirse (Digitaria), Lieschgras (Phleum), Rispengras (Poa), Schwingel (Festuca), Eleusine, Brachiaria, Lolch (Lolium), Trespe (Bromus), Hafer (Avena), Zypergras (Cyperus), Mohrenhirse (Sorghum), Quecke (Agropyron), Hundszahngras (Cynodon), Monocharia, Fimbristylis, Pfeilkraut (Sagittaria), Sumpfried (Eleocharis), Simse (Scirpus), Paspalum, Ischaemum, Sphenoclea, Dactyloctenium, Straußgras (Agrostis), Fuchsschwanzgras (Alopecurus), Windhalm (Apera).

*Monokotyle Kulturen* der Gattungen: Reis (Oryza), Mais (Zea), Weizen (Triticum), Gerste (Hordeum), Hafer (Avena), Roggen (Secale), Mohrenhirse (Sorghum), Hirse (Panicum), Zuckerrohr (Saccharum), Ananas (Ananas), Spargel (Asparagus), Lauch (Allium).

Die Verwendung der erfindungsgemäßen Wirkstoffe ist jedoch keineswegs auf diese Gattungen beschränkt, sondern erstreckt sich in gleicher Weise auch auf andere Pflanzen.

Die Verbindungen eignen sich in Abhängigkeit von der Konzentration zur Totalunkrautbekämpfung z.B. auf Industrie- und Gleisanlagen und auf Wegen und Plätzen mit und ohne Baumbewuchs. Ebenso können die Verhindungen zur Unkrautbekämpfung in Dauerkulturen z.B. Forst-, Ziergehölz-, Obst-, Wein-, Citrus-, Nuss-, Bananen-, Kaffee-, Tee-, Gummi-, Ölpalm-, Kakao-, Beerenfrucht- und Hopfenanlagen und zur selektiven Unkrautbekämpfung in einjährigen Kulturen eingesetzt werden.

Die erfindungsgemäßen Wirkstoffe können vorzugsweise zur selektiven Unkraut- und insbesondere Ungräserbekämpfung in verschiedenen Kulturen eingesetzt werden. Mit den erfindungsgemäßen Wirkstoffen ist es — im Gegensatz zu den als Gräserherbizide bereits bekannten Chloracetaniliden — möglich, neben Dikotylen, z.B. Galinsoga und Sinapis, auch die schwer bekämpfbaren Ungräser Avena fatua oder Alopecurus gleichzeitig mit anderen Schadgräsern, z.B. Digitaria, Echinochloa, Panicum und/oder Setaria in Kulturen, wie Zuckerrüben, Sojabohnen, Bohnen, Baumwolle, Raps, Erdnüssen, Gemüsearten, Mais und Reis erfolgreich zu bekämpfen.

Die erfindungsgemäßen Wirkstoffe können in die üblichen Formulierungen übergeführt werden, wie Lösungen, Emulsionen, Suspensionen, Pulver, Pasten und Granulate. Diese werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, Benzol oder Alkylnaphthaline, chlorierte Aromaten oder chlorierte aliphatische Kohlenwasserstoffe, wie Chlorbenzole, Chloräthylene oder Methylenchlorid, aliphatische Kohlenwasserstoffe, wie Cyclohexan oder Paraffine, z.B. Erdölfraktionen, Alkohole, wie Butanol oder Glycol sowie deren Äther und Ester, Ketone, wie Aceton, Methyläthylketon, Methylisobutylketon oder Cyclohexanon, stark polare Lösungsmittel, wie Dimethylformamid und Dimethylsulfoxid, sowie Wasser, mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Dichlordifluormethan oder Trichlorfluormethan; als feste Trägerstoffe: natürlich Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als Emulgiermittel; nichtionogene und anionische Emulgatoren, wie Polyoxyäthylen-Fettsäure-Ester, Polyoxyäthylen-Fettalkohol-Äther, z.B. Alkylaryl-polyglycol-Äther, Alkylsulfonate, Alkylsulfate, Arylsulfonate sowie Eiweißhydrolysate; als Dispergiermittel: z.B. Lignin-Sulfitablaugen und Methylcellulose.

Die erfindungsgemäßen Wirkstoffe können als solche oder in ihren Formulierungen zur Verstärkung und Ergänzung ihres Wirkungsspektrums je nach beabsichtigter Verwendung mit anderen herbiziden Wirkstoffen kombiniert werden, wobei Fertigformulierung oder Tankmischung möglich ist.

Die Formulierungen enthalten im allgemeinen zwischen 0,1 und 95 Gew.-% Wirkstoff, vorzugsweise zwischen 0,5 und 90 Gew.-%.

Die Wirkstoffe können als solche, in Form ihrer Formulierungen oder den daraus bereiteten Anwendungsformen, wie gebrauchsfertige Lösungen, Emulsionen, Suspensionen, Pulver, Pasten und Granulate angewendet werden. Die Anwendung geschieht in üblicher Weise, z.B. durch Spritzen, Sprühen, Stäuben, Streuen und Gießen.

Die erfindungsgemäßen Wirkstoffe können sowohl nach als auch insbesondere vor dem Auflaufen der Pflanzen appliziert werden. Sie können auch vor der Saat in den Boden eingearbeitet werden.

Die aufgewandte Wirkstoffmenge kann in größeren Bereichen schwanken. Sie hängt im wesentlichen von der Art des gewünschten Effekts ab. Im allgemeinen liegen die Aufwandmengen zwischen 0,1 und 10 kg Wirkstoff pro ha, vorzugsweise zwischen 0,2 und 5 kg/ha.

Die guten herbiziden Wirkungen der erfindungsgemäßen Wirkstoffe und ihre selektiven Einsatzmöglichkeiten gehen aus den nachfolgenden Beispielen hervor.

Die erfindungsgemäßen Wirkstoffe können auch mit anderen Herbiziden gemischt werden, z.B. mit: Metamitron für Zuckerrüben, mit Metribuzin für Sojabohnen, mit Atrazin für Mais und mit Diuron bzw. Fluomethuron für Baumwolle.

Beispiel A

Pre-emergence-Test

Lösungsmittel: 5 Gewichtstelle Aceton

Emulgator: 1 Gewichtsteil Alkylarylpolyglycoläther

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Samen der Testpflanzen werden in normalen Boden ausgesät und nach 24 Stunden mit der Wirkstoffzubereitung begossen. Dabei hält man die Wassermenge pro Flächeneinheit zweckmäßigerweise konstant. Die Wirkstoffkonzentration in der Zubereitung spielt keine Rolle, entscheidend ist nur die Aufwandmenge des Wirkstoffs pro Flächeneinheit. Nach drei Wochen wird der Schädigungsgrad der Pflanzen bonitiert in % Schädigung im Vergleich zur Entwicklung der unbehandelten Kontrolle. Es bedeuten:

0% = keine Wirkung (wie unbehandelte Kontrolle)
100% = totale Vernichtung

Wirkstoffe, Aufwandmengen und Resultate gehen aus der nachfolgenden Tabelle hervor:

TABELLE A

Pre-Emergence-Test

| Wirkstoffe | Wirkstoff-aufwand kg/ha | Setaria | Sinapis | Matricaria | Galinsoga | Stellaria | Lolium | Echinochloa | Cyperus | Weizen | Hafer | Baumwolle | Mais | Rüben |
|---|---|---|---|---|---|---|---|---|---|---|---|---|---|---|
| 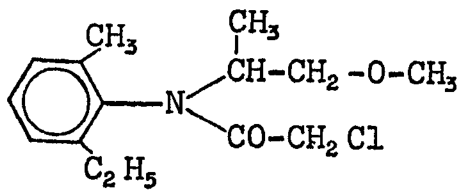 (bekannt) | 5 | 90 | 20 | 80 | 90 | 40 | 80 | 90 | – | 40 | 40 | 0 | 30 | 30 |
| | 2,5 | 90 | 0 | 80 | 80 | 0 | 80 | 90 | – | 40 | 40 | 0 | 20 | 20 |
| 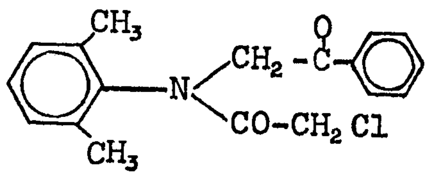 (8) | 5 | 100 | 80 | 80 | 100 | 20 | 80 | 100 | 100 | 60 | 60 | 0 | 20 | 0 |
| | 2,5 | 100 | 40 | 60 | 100 | 20 | 80 | 100 | 80 | 40 | 40 | 0 | 0 | 0 |

*Herstellungsbeispiele*

Beispiel 1

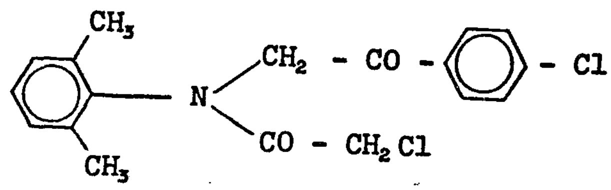

In eine Lösung von 18,5 g (0,068 Mol) 2,6-Dimethyl-N-(4-chlorbenzoylmethyl)-anilin in 150 ml Benzol werden 16 ml (0,2 Mol) Chloracetylchlorid getropft. Danach läßt man 15 Stunden unter Rückfluß rühren und engt durch Abdestillieren des Lösungsmittels und des überschüssigen Chloracetylchlorids im Vakuum ein. Der Rückstand wird mit einem Gemisch Aether/Petroläther (1:3) verrieben, der entstehende kristalline Rückstand abgesaugt und getrocknet. Man erhält 17,7 g (75% der Theorie) 2,6-Dimethyl-N-(4-chlorbenzoylmethyl)-chloracetanilid vom Schmelzpunkt 128°C.

*Herstellung des Ausgangsproduktes*

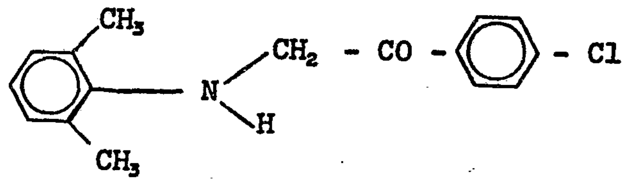

46,7 g (0,2 Mol) ω-Brom-4-chloracetophenon in 40 ml Aethanol werden zu 48,4 g (0,4 Mol) 2,6-Dimethylanilin in 40 ml Aethanol gegeben und 20 Minuten auf 50°C erwärmt. Danach kühlt man auf 0°C ab, filtriert die entstandenen Kristalle ab und wäscht mit wenig Aethanol nach. Man erhält 30 g (55% der Theorie) 2,6-Dimethyl-N-(4-chlorbenzoylmethyl)-anilin vom Schmelzpunkt 82°C.

Beispiel 2

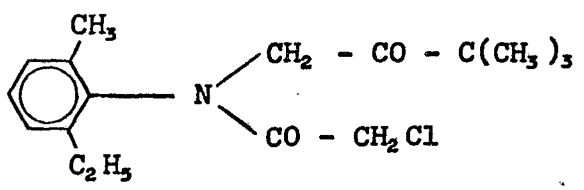

23,3 g (0,1 Mol) 2-Aethyl-6-methyl-N-pivaloylmethyl-anilin werden in 100 ml Benzol gelöst und mit 24 ml (0,3 Mol) Chloracetylchlorid versetzt. Danach läßt man 15 Stunden unter Rückfluß rühren und engt durch Abdestillieren des Lösungsmittels und des überschüssigen Chloracetylchlorids im Vakuum ein. Der ölige Rückstand wird mit Petroläther verrührt, dekantiert, mit Aktivkohle verrührt, filtriert und im Vakuum eingeengt. Der Rückstand wird mit n-Hexan verrührt, der resultierende Feststoff abgesaugt und getrocknet. Man erhält 13,7 g (45 % der Theorie) 2-Aethyl-6-methyl-N-pivaloylmethyl-chloracetanilid vom Schmelzpunkt 86°C.

*Herstellung des Ausgangsproduktes*

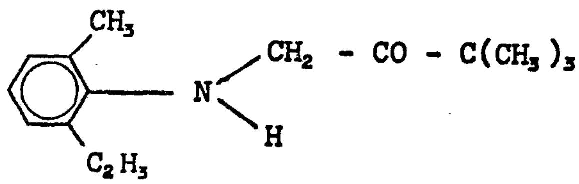

108 g (0,8 Mol) 2-Aethyl-6-methyl-anilin und 53,8 g (0,4 Mol. Monochlorpinakolin werden in 300 ml Toluol 25 Stunden auf 110°C erhitzt. Man läßt abkühlen, filtriert, wäscht das Filtrat mit Wasser, trocknet über Natriumsulfat und engt durch Abdestillieren des Lösungsmittels im Vakuum ein. Der Rückstand wird fraktioniert destilliert. Man erhält 24,1 g (26% der Theorie) 2-Aethyl-6-methyl-N-pivaloylmethyl-anilin vom Siedepunkt 138—150°C/0,7 mm und einem Brechungsindex von $n_D^{20}$ = 1,5168.

In analoger Weise werden die in der nachfolgenden Tabelle 1 aufgeführten Verbindungen hergestellt.

TABELLE 1

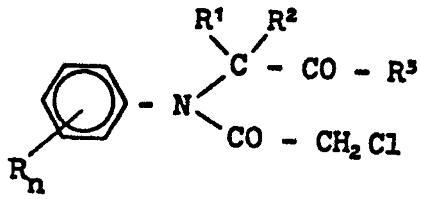

| Bsp. Nr. | $R_n$ | $R^1$ | $R^2$ | $R^3$ | Schmelzpunkt (°C) bzw Brechungsindex |
|---|---|---|---|---|---|
| 3 | 2–$CH_3$ | H | H | 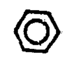 | 138 |
| 4 | 2–$CH_3$ | H | H | 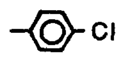 | 140 |
| 5 | 2,6–$(C_2H_5)_2$ | H | H | 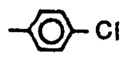 | 134 |
| 6 | 2,6–$(C_2H_5)_2$ | H | H | 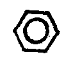 | 116 |
| 7 | 2–Cl | H | H | 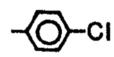 | 124 |
| 8 | 2,6–$(CH_3)_2$ | H | H | 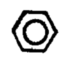 | 100 |
| 9 | 4–Cl | H | H | 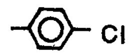 | 114 |
| 10 | 2,6–$(CH_3)_2$ | $CH_3$ | H | $CH_3$ | 104 |
| 11 | 2,6–$(i\text{-}C_3H_7)_2$ | H | H | 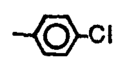 | 200 |
| 12 | 2,6–$(C_2H_5)_2$, 4–$CH_3$ | H | H | 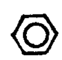 | 112 |
| 13 | 2,6–$(i\text{-}C_3H_7)_2$ | H | H | 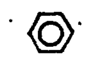 | 140 |
| 14 | 2,6–$(CH_3)_2$ | H | H | 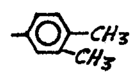 | 90 |
| 15 | 2–$C_2H_5$, 6–$CH_3$ | H | H | 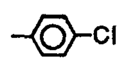 | 70 |
| 16 | 2,6–$(CH_3)_2$ | H | H | 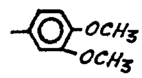 | 114 |
| 17 | 2–$C_2H_5$, 4,6–$(CH_3)_2$ | H | H | 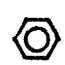 | $n_D^{20}$ = 1,5680 |
| 18 | 2,6–$(CH_3)_2$ | H | H | 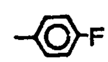 | 104 |
| 19 | 2,4,6–$(CH_3)_3$ | H | H | 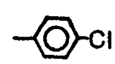 | 134 |

TABELLE 1 (Fortsetzung)

| Bsp. Nr. | $R_n$ | $R^1$ | $R^2$ | $R^3$ | Schmelzpunkt (°C) bzw Brechungsindex |
|---|---|---|---|---|---|
| 20 | 2,4,6–$(CH_3)_3$ | H | H | 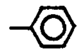 | $n_D^{20}$ = 1,5610 |
| 21 | 2,6–$(CH_3)_2$ | H | 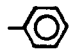 | 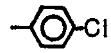 | 149 |
| 22 | 2,6–$(CH_3)_2$ | H | $CH_3$ | 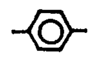 | 84 |

In analoger Weise können die in der nachfolgenden Tabelle 2 aufgeführten Verbindungen erhalten werden.

TABELLE 2

| Beispiel Nr. | $R_n$ | $R^1$ | $R^2$ | $R^3$ |
|---|---|---|---|---|
| 23 | 3,5–$(CF_3)_2$ | H | H | 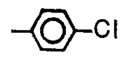 |
| 24 | 2,6–$(CH_3)_2$ | H | H | 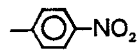 |
| 25 | 2,6–$(CH_3)_2$ | H | H | 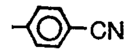 |
| 26 | 2,6–$(CH_3)_2$ | H | H | 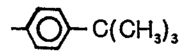 |
| 27 | 2,6–$(CH_3)_2$, 4–$SO_2NH_2$ | H | H | 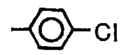 |
| 28 | 2–Cl, 6–$CH_3$ | H | H | 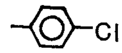 |
| 29 | 2–$C_2H_5$, 6–$CH_3$ | $CH_3$ | $CH_3$ | 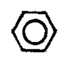 |
| 30 | 2–$C_2H_5$, 6–$CH_3$ | $CH_3$ | $CH_3$ | 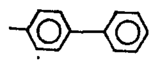 |
| 31 | 2–$C_2H_5$, 6–$CH_3$ | $CH_3$ | $CH_3$ | 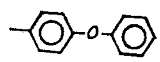 |
| 32 | 2–$C_2H_5$, 6–$CH_3$ | $CH_3$ | $CH_3$ | 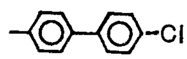 |
| 33 | 2–$C_2H_5$, 6–$CH_3$ | $CH_3$ | $CH_3$ | 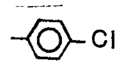 |
| 34 | 2–$C_2H_5$, 6–$CH_3$ | H | $CH_3$ | 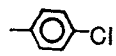 |
| 35 | 2–$C_2H_5$, 6–$CH_3$ | H | $CH_3$ | 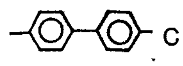 |
| 36 | 2,6–$(CH_3)_2$ | H | 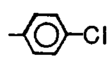 | 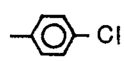 |
| 37 | 2,6–$(CH_3)_2$ | H | 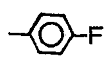 | 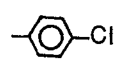 |
| 38 | 2,6–$(CH_3)_2$ | H | 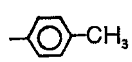 | 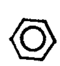 |
| 39 | 2,6–$(CH_3)_2$ | H | 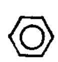 | 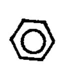 |
| 40 | 2,6–$(CH_3)_2$ | H | 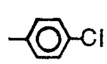 | 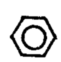 |
| 41 | 2,6–$(CH_3)_2$ | H | $CH_3$ | 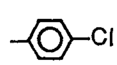 |

**Patentansprüche**

1. N-Acylmethyl-chloracetanilide der Formel

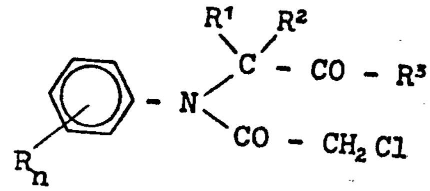

(I)

in welcher

R für Alkyl, Halogen, Halogenalkyl, Alkylthio, Alkylsulfonyl, Aminosulfonyl, Cyano oder Nitro steht,

$R^1$ und $R^2$ gleich oder verschieden sind und für Wasserstoff, Alkyl, Halogen, Halogenalkyl oder gegebenenfalls substituiertes Phenyl stehen,

$R^3$ für Alkyl oder gegebenenfalls substituiertes Phenyl steht und

n für ganze Zahlen von 0 bis 5 steht.

2. Verfahren zur Herstellung von N-Acylmethyl-chloracetaniliden, dadurch gekennzeichnet, daß man N-Acylmethylaniline der Formel

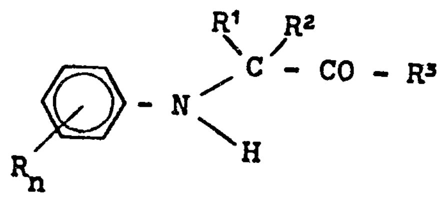

(II)

in welcher

R, $R^1$, $R^2$, $R^3$ und n die oben angegebene Bedeutung haben,

mit Chloracetylchlorid in Gegenwart eines Verdünnungsmittels umsetz.

3. Herbizide Mittel, gekennzeichnet durch einen Gehalt an N-Acylmethyl-chloracetaniliden gemäß Anspruch 1.

4. Verwendung von N-Acylmethyl-chloracetaniliden gemäß Anspruch 1 zur Bekämpfung von unerwünschtem Pflanzenwachstum.

5. Verfahren zur Herstellung von herbiziden Mitteln, dadurch gekennzeichnet, daß man N-Acylmethyl-chloracetanilide gemäß Anspruch 1 mit Streckmitteln und/oder oberflächenaktiven Mitteln vermischt.

**Revendications**

1. Des N-acylméthyl-chloracétanilides de formule:

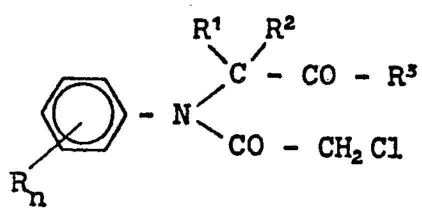

(I)

dans laquelle:

R est un groupe alkyl, un halogène, un groupe halogènalkyle, alkylthio, alkylsulfonyle, aminosulfonyle,, cyano ou nitro,

$R^1$ et $R^2$ sont égaux ou différents et représentent de l'hydrogène, un groupe alkyle, un halogène, un groupe halogénalkyle ou un groupe phényle éventuellement substitué,

$R^3$ est un groupe alkyle ou un groupe phényle éventuellement substitué, et

*n* représente les nombres entiers de 0 à 5.

2. Procédé de production de N-acylméthyl-chloracétanilides, caractérisé en ce qu'on fait réagir des N-acyl-méthylanilines de formule:

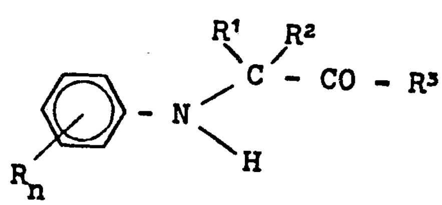

(II)

dans laquelle R, $R^1$, $R^2$, $R^3$ et *n* ont les définitions données ci-dessus, avec le chlorure de chloracétyle en présence d'un diluant.

3. Compositions herbicides, caractérisées par une teneur en N-acylméthyl-chloracétanilides suivant la revendication 1.

4. Utilisation des N-acylméthyl-chloracétanilides suivant la revendication 1 pour la lutte contre une croissance végétale non désirée.

5. Procédé de production de compositions herbicides, caractérisé en ce qu'on mélange des N-acylméthyl-chloracétanilides suivant la revendication 1 avec des diluants et/ou des agents tensio-actifs.

**Claims**

1. N-Alcylmethyl-chloroacetanilides of the formula

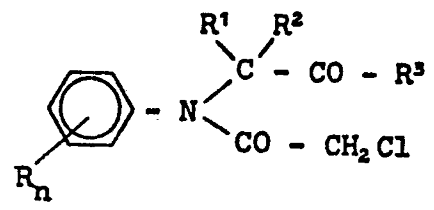

(I)

in which
R represents alkyl, halogen, halogenoalkyl, alkylthio, alkylsulphonyl, aminosulphonyl, cyano or nitro,
$R^1$ and $R^2$ are identical or different and represent hydrogen, alkyl, halogen, halogenoalkyl or optionally substituted phenyl,
$R^3$ represents alkyl or optionally substituted phenyl and
n represents integers from 0 to 5.

2. Process for the preparation of N-acylmethyl-chloroacetanilides, characterised in that N-acylmethylanilines of the formula

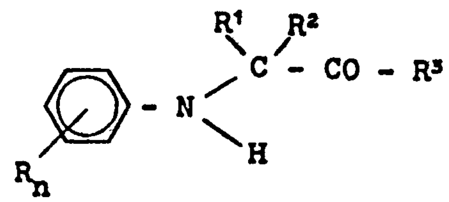

(II)

in which
R, $R^1$, $R^2$, $R^3$ and n have the meaning indicated above, are reacted with chloroacetyl chloride in the presence of a diluent.

3. Herbicidal agents, characterised in that they contain N-acylmethyl-chloroacetanilides according to Claim 1.

4. Use of N-acylmethyl-chloroacetanilides according to Claim 1 for combating undesired plant growth.

5. Process for the preparation of herbicidal agents, characterised in that N-acylmethyl-chloroacetanilides according to Claim 1 are mixed with extenders and/or surface-active agents.